# EUROPÄISCHE PATENTANMELDUNG

(11) **EP 1 634 998 A1**
(43) Veröffentlichungstag der Anmeldung: **15.03.2006**
(21) Anmeldenummer: 05019561.9
(22) Anmeldetag: 08.09.2005
(51) Int. Cl.: E02B 17/02, F03D 1/00, F03D 11/04, B63B 35/00

(54) **Transport und Gründung von Funktionseinheiten, insbesondere Offshore-Windkraftanlagen**

(30) Priorität: 08.09.2004 DE 102004043505
(71) Anmelder: Maierform Maritime Technology GmbH, 27588 Bremerhaven (DE)
(72) Erfinder: Bergfelder, Jürgen Prof-.Dr.Ing, 50999 Köln (DE); Ibe, Hans-Joachim Dipl.-Ing., 20789 Leer (DE)
(74) Vertreter: Manitz, Finsterwald & Partner GbR

(57) **Zusammenfassung**

Die Erfindung betrifft eine Vorrichtung zum Transport und zur Gründung von Funktionseinheiten (11), insbesondere Offshore-Windkraftanlagen, auf dem oder im Wasser, mit wenigstens einer während des Transports als Schwimmkörper dienenden Plattform (13), zumindest einem bezüglich der Plattform (13) höhen- bzw. längenverstellbaren Trägermodul (15a,15b) für die Funktionseinheit (11), insbesondere einem teleskopartig längenveränderlichen Mast oder Turm, und wenigstens einer auf der Plattform (13) verankerten Haltestruktur (17) für das Trägermodul (15a,15b) , wobei die Plattform (13), das Trägermodul (15a,15b) und die Haltestruktur (17) eine als Ganzes schwimmend transportierbare und bei Erreichen einer jeweiligen Gründungsposition absenkbare Einheit bilden, und wobei das von der Haltestruktur (17) abgestützte Trägermodul (15a,15b) zwischen einer Transportstellung und einer Betriebsstellung mit gegenüber der Transportstellung erhöhtem Schwerpunkt relativ zur Plattform (13) verstellbar ist.

## Beschreibung

Die Erfindung betrifft eine Vorrichtung sowie ein Verfahren zum Transport und zur Gründung von Funktionseinheiten, insbesondere Offshore-Windkraftanlagen, auf dem oder im Wasser.

Aufgrund der zunehmenden Kritik an landgestützten Windkraftanlagen kommt der Offshore-Errichtung von so genannten Windparks eine immer größer werdende Bedeutung zu. Allerdings kann die bislang sehr aufwändige Montage und insbesondere auch Wartung von Offshore-Windkraftanlagen deren Wirtschaftlichkeit stark beeinträchtigen.

Aufgabe der Erfindung ist es daher, ein Konzept zu entwickeln, mit dem der Aufwand für die Errichtung und insbesondere auch die Wartung von Offshore-Windkraftanlagen minimiert werden kann.

Die Lösung dieser Aufgabe erfolgt durch die Merkmale des Anspruchs 1 und insbesondere dadurch, dass die Vorrichtung wenigstens eine während des Transports als Schwimmkörper dienende Plattform, zumindest ein bezüglich der Plattform höhen- bzw. längenverstellbares Trägermodul für die Funktionseinheit und wenigstens eine auf der Plattform verankerte Haltestruktur für das Trägermodul umfasst, wobei die Plattform, das Trägermodul und die Haltestruktur eine als Ganzes schwimmend transportierbare und bei Erreichen einer jeweiligen Gründungsposition absenkbare Einheit bilden, und wobei das von der Haltestruktur abgestützte Trägermodul zwischen einer Transportstellung und einer Betriebsstellung mit gegenüber der Transportstellung erhöhtem Schwerpunkt relativ zur Plattform verstellbar ist.

Die der Erfindung zugrunde liegende Aufgabe wird außerdem durch ein Verfahren mit den Merkmalen des Anspruchs 16 und insbesondere dadurch gelöst, dass zumindest ein höhen- bzw. längenverstellbares Trägermodul für die Funktionseinheit mit einer Haltestruktur verbunden wird, die auf einer während des Transports als Schwimmkörper dienenden Plattform verankert ist, dass die Plattform, das Trägermodul und die Haltestruktur zusammen mit der Funktionseinheit als Ganzes schwimmend zu einer jeweiligen Gründungsposition transportiert und bei Erreichen der jeweiligen Gründungsposition abgesenkt werden, und dass an der Gründungsposition das von der Haltestruktur abgestützte Trägermodul aus einer Transportstellung in eine Betriebsstellung mit gegenüber der Transportstellung erhöhtem Schwerpunkt relativ zur Plattform verstellt wird.

Die Erfindung ist insbesondere in Verbindung mit Offshore-Windkraftanlagen von Vorteil, kann jedoch grundsätzlich auch für beliebige andere Funktionseinheiten, insbesondere hochbauende bzw. turmartige Strukturen verwendet werden.

Ein wesentlicher Vorteil der Erfindung ist, dass das Gesamtsystem an Land oder in einem Hafen montiert und komplettiert werden kann. Auch die Erprobung und die Abnahme brauchen nicht auf See zu erfolgen. Erfindungsgemäß ist folglich ein kostspieliger Einzeltransport aller Komponenten nicht erforderlich. Eine aufwändige Offshore-Montage entfällt also.

Aufgrund des im Vergleich zur Betriebsstellung niedrigen Schwerpunkts des Trägermoduls und damit des Gesamtsystems in der Transportstellung ist ein problemloser und sicherer Seetransport auch bei hohen Windstärken und ungünstigen Seegangsverhältnissen möglich, was vor allem bei kopflastigen Windkraftanlagen von Vorteil ist.

Erfindungsgemäß dient die Plattform sowohl während des Transports als auch während der Gründungs- oder Errichtungsphase sowie während des anschließenden Betriebs auf See als Basis für das die Funktionseinheit tragende Trägermodul und für die das Trägermodul stützende Haltestruktur. Einmal auf dem Wasser, können das Trägermodul und die Funktionseinheit folglich ununterbrochen auf der schwimm- und tauchfähigen Plattform verbleiben, auf der sie stets von der mit der Plattform verbundenen Haltestruktur gesichert werden.

Die Gründungs- oder Errichtungsmaßnahmen auf See beschränken sich dank der Erfindung folglich auf das Absenken und Verankern der die Funktionseinheit und die Haltestruktur tragenden Plattform. Hierfür ist bevorzugt ein vorbereitetes Fundament z.B. in Form einer Mehrzahl von am Meeresboden verankerter Gründungspfählen vorgesehen. Zu Stabilisierungszwecken kann das Absenken der Plattform durch Schwimmkräne unterstützt werden.

Die erfindungsgemäße Höhen- bzw. Längenverstellbarkeit des Trägermoduls erlaubt dann eine autarke Einnahme der Betriebsstellung ohne externe Hilfsmittel. Folglich wird erfindungsgemäß der an der Seebaustelle zu betreibende Aufwand, der unter wirtschaftlichen und technischen Gesichtspunkten derzeit ein großes Problem bei der Errichtung von Windparks darstellt, auf ein Minimum reduziert.

Ein weiterer wesentlicher Vorteil der Erfindung besteht darin, dass durch das Vorsehen einer im Wesentlichen autarken Einheit aus Plattform, Funktionseinheit mit Trägermodul und Haltestruktur und durch die Höhen- bzw. Längenverstellbarkeit des Trägermoduls das Gesamtsystem sich nicht nur für den Transport und die Gründung als besonders wirtschaftlich erweist, sondern dass außerdem eine effiziente Wartung der Funktionseinheit möglich ist. Durch eine nach unten gerichtete Verstellbewegung des Trägermoduls kann durch Absenken der gesamten Funktionseinheit ein zu wartender oder auszutauschender Bestandteil der Funktionseinheit auf eine beispielsweise für übliche Schwimmkräne problemlos erreichbare Höhe abgesenkt werden.

Die Erfindung umfasst also als unabhängigen Aspekt auch ein Verfahren zur Wartung, Instandsetzung und/oder zum Austausch von Funktionseinheiten, wie z.B. Offshore-Windkraftanlagen, oder Teilen davon auf dem oder im Wasser.

Die Haltestruktur kann mit einer oder mehreren Aufnahmeeinrichtungen für zu wartende bzw. auszutauschende Bestandteile der Funktionseinheit versehen sein, die so ausgebildet und angebracht sind, dass der betreffende Bestandteil durch Verstellen des Trägermoduls nach unten von der Aufnahmeeinrichtung aufgenommen werden kann. Im Fall von Windkraftanlagen kann die Aufnahmeeinrichtung zur Aufnahme eines Rotorblattes und insbesondere köcherartig ausgebildet sein. Ein solcher Rotorblatt-Köcher ist auch während des Seetransports der Windkraftanlage zur Stabilisierung bzw. Sicherung des Gesamtsystems und seiner Einzelteile von Vorteil.

Das Trägermodul kann entweder als ein Bestandteil der erfindungsgemäßen Transport- und Gründungsvorrichtung oder als ein Bestandteil der Funktionseinheit angesehen werden. Wird beispielsweise die Erfindung zur Errichtung von Offshore-Windkraftanlagen verwendet, so kann die den Rotor tragende Generatorgondel entweder alleine oder zusammen mit dem längenveränderlichen Mast eine Funktionseinheit im Sinne der Erfindung bilden.

Weitere bevorzugte Ausführungsformen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1 - 5: jeweils in einer Seitenansicht verschiedene Phasen der Errichtung einer Offshore-Windkraftanlage unter Verwendung einer erfindungsgemäßen Vorrichtung, und
- Fig. 6: eine Draufsicht auf die erfindungsgemäße Vorrichtung vor dem Absenkvorgang.

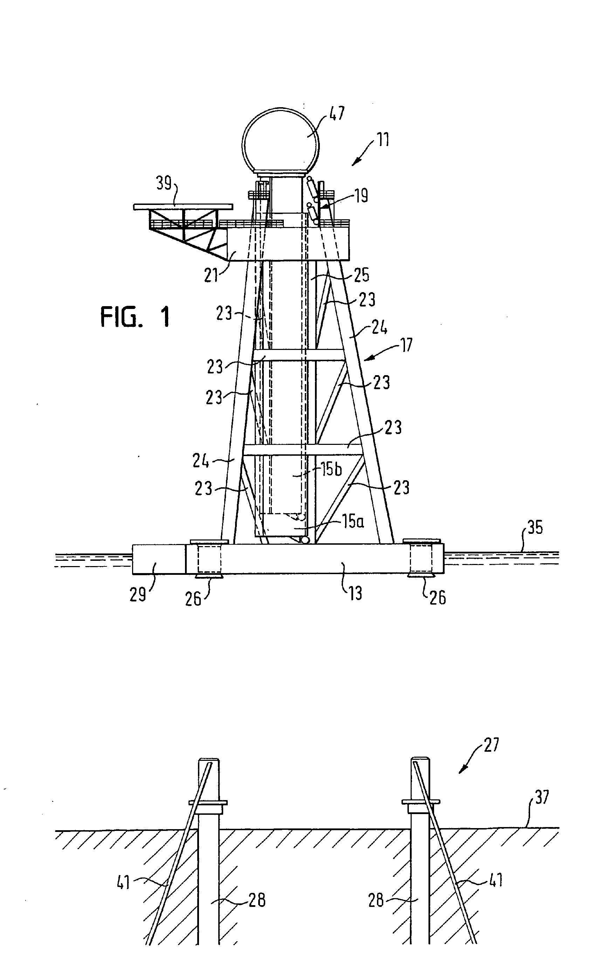

Die erfindungsgemäße Vorrichtung umfasst eine während des Transports der Offshore-Windkraftanlage 11 als Schwimmkörper dienende Plattform 13 (Fig. 1). Mit der Plattform 13 lösbar verbunden sind mehrere Hilfsschwimmkörper 29, die gemeinsam mit der Plattform 13 einen schwimmfähigen Ponton mit bezogen auf die Gesamtlast ausreichend groß bemessenem Auftrieb bilden. Die Hilfsschwimmkörper 29 sind insbesondere für den Transport der Windkraftanlage 11 zur jeweiligen Gründungsposition vorgesehen und werden nach Abschluss des Gründungsvorgangs entfernt.

Im abgesenkten Verankerungszustand stellt die Plattform 13 eine Angriffsfläche für Wellenkräfte dar, wobei diese Angriffsfläche jedoch durch das Konzept der abnehmbaren Hilfsschwimmkörper 29 auf ein Minimum reduziert ist.

Die Plattform 13 ist schiffbauartig konstruiert und zur Aufnahme von in der vorgesehenen Verankerungstiefe herrschenden Wasserdruckkräften ausgelegt. Des Weiteren ist die Plattform 13 in mehrere voneinander abgeschlossene Ballastzellen oder -tanks unterteilt, die zur Durchführung der Abtauch- und Auftauchvorgänge geflutet bzw. gelenzt werden können.

Auf der Plattform 13 ist eine als Dreibein oder Tripod in Fachwerkbauweise ausgebildete Haltestruktur 17 fest verankert. Die Höhe dieser ausgesteiften Stahlkonstruktion beträgt beispielsweise etwa 50m, so dass sich im schwimmenden Zustand (Fig. 1) das obere Ende der Haltestruktur 17 etwa 50m oberhalb der Wasserlinie 35 befindet.

In ihrem oberen Bereich sind die drei Längssäulen 24 des Tripod 17 durch eine biegesteife, an einer Seite zu einem Helikopterdeck 39 verlängerte Fachwerk- oder Kastenstruktur 21 miteinander verbunden. Des Weiteren sind eine Stützkonstruktion für vertikal verlaufende Schienen 25, die sich über die gesamte Höhe des Tripod 17 erstrecken, sowie horizontal und schräg verlaufende Tragelemente 23 vorgesehen, welche die drei Längssäulen 24 und die Stützkonstruktion der Schienen 25 verbinden und fachwerkartig aussteifen.

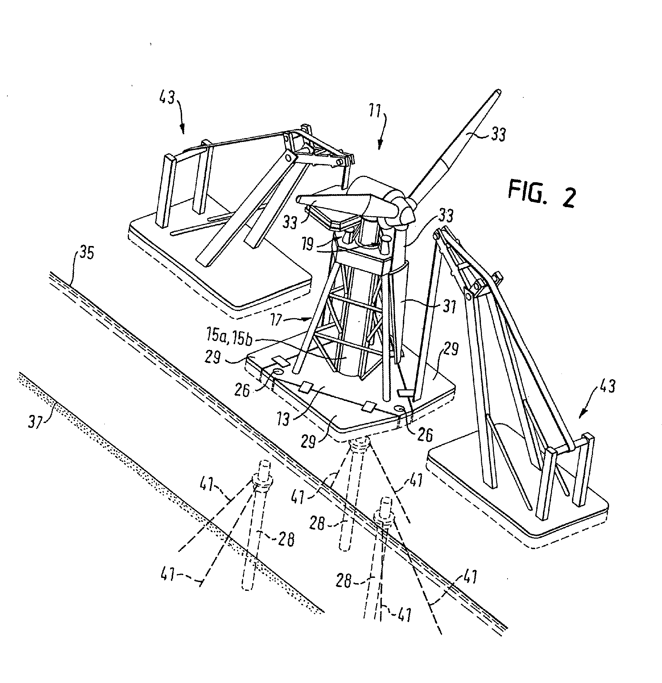

Die zur Gründungsposition zu transportierende und an der Gründungsposition zu errichtende Windkraftanlage 11 umfasst einen aus zwei Mastschüssen 15a, 15b bestehenden, teleskopartig längenveränderlichen Mast, wobei der obere Mastschuss 15b die Generatorgondel 47 der Windkraftanlage 11 trägt, an welcher der lediglich in Fig. 2 dargestellte, mit drei Rotorblättern 33 versehene Rotor angebracht ist. Wie vorstehend bereits erwähnt, kann im Rahmen der Erfindung auch die Generatorgondel 47 alleine als Funktionseinheit bzw. Windkraftanlage angesehen werden. Ebenso ist es möglich, das Gesamtsystem aus Plattform 13, Haltestruktur 17, Mast 15a, 15b und Gondel 47 als eine schwimm- und tauchfähige, im Wesentlichen autarke Offshore-Windenergieanlage anzusehen.

Während des Transports und zu Beginn der Gründungsphase sind die beiden Mastschüsse 15a, 15b ineinander geschoben, so dass in dieser Transportstellung die Windkraftanlage 11 eine minimale Länge von beispielsweise etwa 60 bis 70m einschließlich der Generatorgondel 47 aufweist. In der Transportstellung ist die Windkraftanlage 11 mit ihrem zusammen geschobenen Mast 15a, 15b nahezu vollständig in die von dem Fachwerk-Tripod gebildete Dreibeinkonstruktion 17 abgesenkt, so dass das untere Ende des unteren Mastschusses 15a sich in Höhe der Oberseite der Plattform 13 befindet. Die Generatorgondel 47 befindet sich in dieser Transportstellung oberhalb des oberen Endes des Tripod 17. In der Transportstellung befindet sich das Gesamtsystem folglich in einem Zustand mit tiefstmöglichem Schwerpunkt und somit in einem Zustand optimaler Schwimmstabilität und -sicherheit.

Die untere Fundamentierung des Mastes bzw. des unteren Mastschusses 15a erfolgt mittels eines vertikalen Schraubstoßes in der im oberen Bereich des Tripod 17 vorgesehenen Kastenstruktur 21. Die Verbindung der beiden Mastschüsse 15a, 15b erfolgt ebenfalls mittels eines vertikalen Schraubstoßes. Die Generatorgondel 47 ist mittels eines horizontalen Schraubstoßes auf den oberen Mastschuss 15b aufgesetzt.

Des Weiteren ist der Teleskopmast 15a, 15b mit Führungsschienen 44 und Laufrädern 45 versehen, die für eine ausreichende Einspannung des Mastes 15a, 15b während des Ausfahrens bzw. Einfahrens sorgen.

An der Gründungsposition befindet sich ein vorbereitetes Fundament 27 in Form von am Meeresboden 37 verankerten, beispielsweise etwa 10m aus dem Meeresboden 37 herausragenden Gründungspfählen 28, auf welche die Plattform 13 durch Absenken aufgesteckt werden kann. Mit Hilfe von Schrägpfählen 41 können die Gründungspfähle 28 erforderlichenfalls zusätzlich gehalten werden.

Wie Fig. 2 zeigt, stehen zur stabilisierenden Unterstützung des Absenkvorgangs Schwimmkräne 43 bereit. Die in Fig. 2 noch dargestellten Hilfsschwimmkörper 29 werden nach dem Absenken und nach Herstellung der Verbindung zwischen der Plattform 13 und den Gründungspfählen 28, d.h. nach Abschluss des Gründungsvorgangs, entfernt.

Fig. 2 zeigt ferner eine köcherartige Aufnahmeeinrichtung 31, die an dem Tripod 17 befestigt ist und in die in der Transportstellung ein Rotorblatt 33 teilweise aufgenommen ist. Hierdurch wird eine Transportsicherung für die Funktionseinheit 11 realisiert.

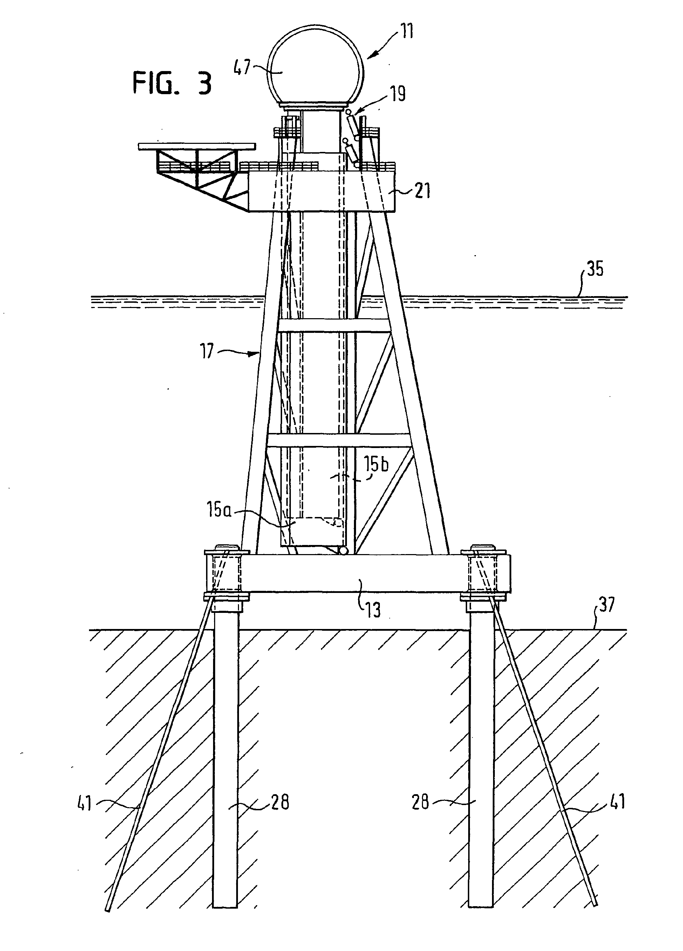

Fig. 3 zeigt das erfindungsgemäße Transport- und Errichtungssystem im auf die Gründungspfähle 28 abgesenkten Zustand. Die aus dem beispielsweise in einer Tiefe von etwa 42m liegenden Meeresboden 37 herausragenden freien Enden der Pfähle 28 dienen als Steck- oder Anschlussabschnitte, die beim Absenken der Plattform 13 durch darin ausgebildete Anschlussöffnungen 26 (Fig. 2) geführt werden. In dieser Phase der Errichtung ist der Teleskopmast 15a, 15b der Windkraftanlage 11 noch zusammen geschoben.

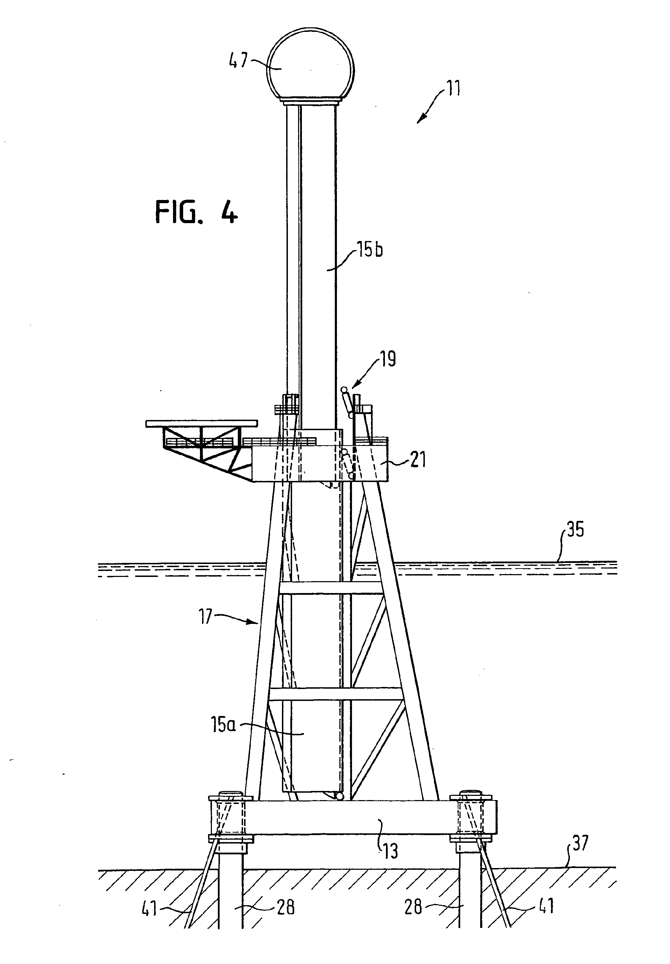

Im Anschluss an die endgültige Befestigung der Plattform 13 an den Gründungspfählen 28 wird zunächst der obere Mastschuss 15b ausgefahren (Fig. 4). Für diese Höhen- bzw. Längenverstellung ist eine hydraulische Hub-/Senkvorrichtung 19 vorgesehen, die drei in Umfangsrichtung verteilt angeordnete Verstellmodule umfasst.

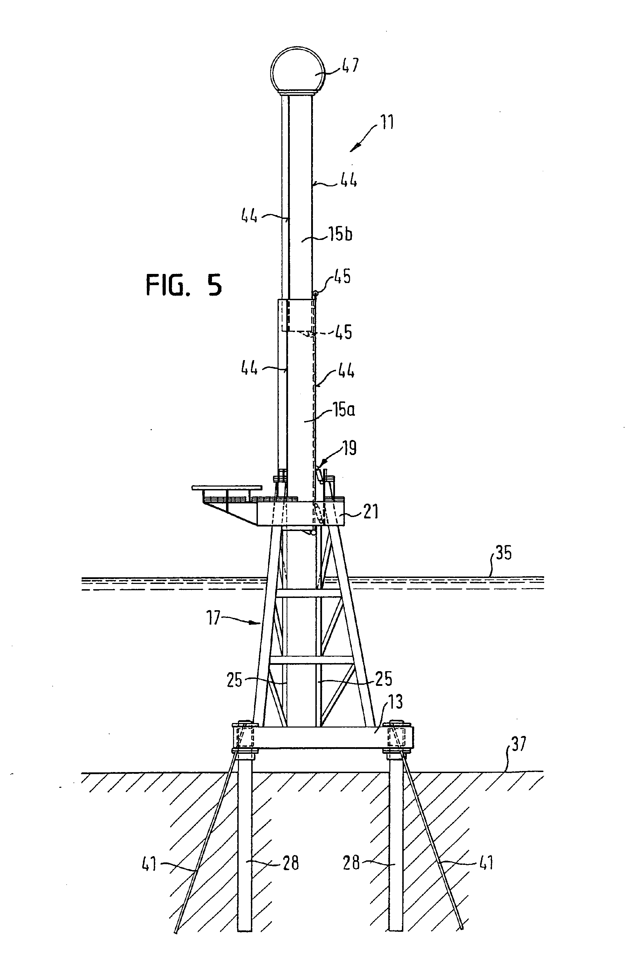

Nach dem vollständigen Ausfahren des oberen Mastschusses 15b und der Verbindung mit dem unteren Mastschuss 15a wird der untere Mastschuss 15a ausgefahren, wodurch der obere Mastschuss 15b weiter angehoben und schließlich die Generatorgondel 47 in ihre endgültige Betriebshöhebeispielsweise etwa 110 m oberhalb der Wasserlinie 35 - gelangt (Fig. 5).

Das Ausfahren und Einfahren der Mastschüsse 15a, 15b erfolgt im so genannten Jack-Up-Verfahren. Jedes Modul der Hub-/Senkvorrichtung 19 umfasst zwei Hydraulikzylinder, von denen der eine den Hub- bzw. Absenkvorgang bewirkt und der andere den betreffenden Mastschuss 15a, 15b am Ende eines jeweiligen Hub- bzw. Absenk-Taktes festhält, damit der eine Hydraulikzylinder in seine Ausgangsstellung zurückfahren kann, um dann einen weiteren Hub- bzw. Absenk-Takt zu vollführen. Als Lasteinleitungspunkte für die Hub-/ Senkvorrichtung 19 sind an den Mastschüssen 15a, 15b triebstockartige Bolzen vorgesehen.

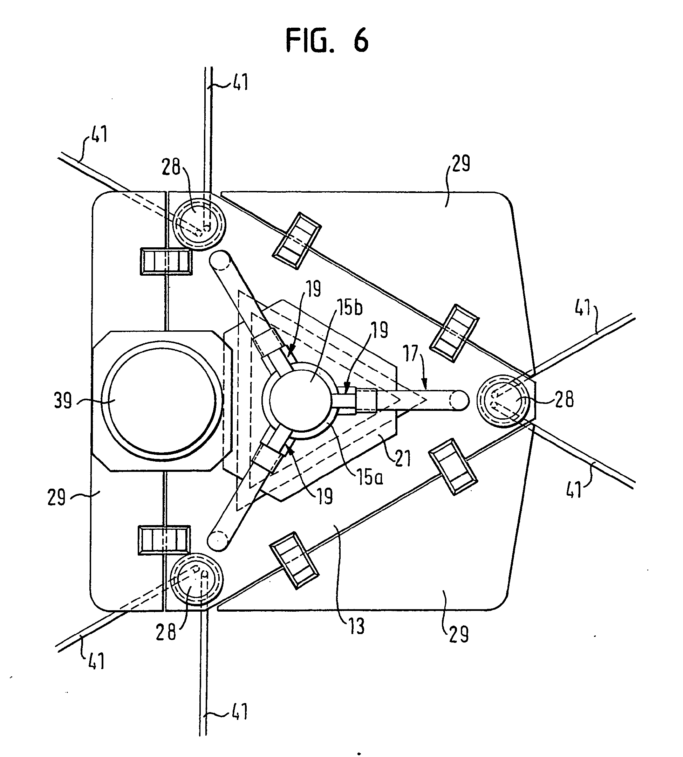

Die Draufsicht der Fig. 6 zeigt das erfindungsgemäße Gesamtsystem mit an der Hauptplattform 13 angebrachten Hilfsschwimmkörpern 29.

Da die Verbindung zwischen der Plattform 13 und den Gründungspfählen 28 lösbar ist und die Plattform 13 problemlos durch Montage der Hilfsschwimmkörper 29 wieder in einen schwimmfähigen Zustand gebracht werden kann, ist es möglich, das erfindungsgemäße Gesamtsystem jederzeit zwecks größerer Instandsetzungsarbeiten oder zur endgültigen Demontage zurück an Land zu verbringen.

Erfindungsgemäß ist das längenveränderliche Trägermodul 15a, 15b nicht nur für die Transport- und Gründungsphase von Vorteil, sondern erleichtert außerdem spätere Wartungs- und Instandsetzungsarbeiten, da die Generatorgondel 47 bei an den Gründungspfählen 28 verankerter Plattform 13 auf eine jeweils erforderliche Arbeitshöhe abgesenkt werden kann.

Der an dem Tripod 17 befestigte Köcher 31 (Fig. 2) dient nicht nur als Transportsicherung, sondern ermöglicht außerdem ein besonders einfaches Auswechseln von Rotorblättern 33 auf See. Durch Absenken der Generatorgondel 47 kann das betreffende Rotorblatt 33 in den Köcher 31 eingesteckt und beispielsweise mit Hilfe eines üblichen Schwimmkranes ausgetauscht werden, woraufhin der Mast 15a, 15b wieder auseinander geschoben wird. Für die Wartung bzw. den Austausch eines Rotorblattes 33 ist der Köcher 31 jedoch nicht zwingend erforderlich. Das Absenken der Generatorgondel 47 kann genügen.

Die Erfindung kombiniert somit in optimaler Weise eine schwimm- und tauchfähige Plattform 13 für eine Offshore-Windkraftanlage 11 bzw. für eine andere hochbauende bzw. turmartige Funktionseinheit, die durch eine fest mit der Plattform 13 verbundene Haltestruktur 17 gesichert und deren Schwerpunkt zur Anpassung an den jeweiligen Betriebszustand in der Höhe verstellbar ist. Die Mehrfunktionalität der Plattform 13 und die Höhenverstellbarkeit der zu errichtenden Funktionseinheit 11 werden erfindungsgemäß also auf ideale Weise miteinander kombiniert.

### Bezugszeichenliste

- 11: Funktionseinheit, Windkraftanlage
- 13: Plattform
- 15a: unteres Segment, Mastschuss
- 15b: oberes Segment, Mastschuss
- 17: Haltestruktur
- 19: Verstelleinrichtung, Hub-/Senkvorrichtung
- 21: Fachwerk- oder Kastenstruktur
- 23: Tragelement
- 24: Längssäule
- 25: Schiene
- 26: Anschlussöffnung
- 27: Fundament
- 28: Gründungspfahl
- 29: Hilfsschwimmkörper
- 31: Aufnahmeeinrichtung, Köcher
- 33: Rotorblatt
- 35: Wasserlinie
- 37: Meeresboden
- 39: Helikopterdeck
- 41: Schrägabstützung, Schrägpfahl
- 43: Schwimmkran
- 44: Führungsschiene
- 45: Laufrad
- 47: Generatorgondel

## Patentansprüche

1. Vorrichtung zum Transport und zur Gründung von Funktionseinheiten (11), insbesondere Offshore-Windkraftanlagen, auf dem oder im Wasser, mit
- wenigstens einer während des Transports als Schwimmkörper dienenden Plattform (13),
- zumindest einem bezüglich der Plattform (13) höhen- bzw. längenverstellbaren Trägermodul (15a, 15b) für die Funktionseinheit (11), insbesondere einem teleskopartig längenveränderlichen Mast oder Turm, und
- wenigstens einer auf der Plattform (13) verankerten Haltestruktur (17) für das Trägermodul (15a, 15b),
wobei die Plattform (13), das Trägermodul (15a, 15b) und die Haltestruktur (17) eine als Ganzes schwimmend transportierbare und bei Erreichen einer jeweiligen Gründungsposition absenkbare Einheit bilden, und
wobei das von der Haltestruktur (17) abgestützte Trägermodul (15a, 15b) zwischen einer Transportstellung und einer Betriebsstellung mit gegenüber der Transportstellung erhöhtem Schwerpunkt relativ zur Plattform (13) verstellbar ist.

2. Vorrichtung nach Anspruch 1,
**dadurch gekennzeichnet ,**
**dass** die Haltestruktur (17) mit einer insbesondere hydraulischen Verstelleinrichtung (19) für das Trägermodul (15a, 15b) versehen ist,
wobei bevorzugt die Verstelleinrichtung (19) eine Mehrzahl von Verstellmodulen umfasst, die an in Umfangsrichtung verteilten Stellen mit dem Trägermodul (15a, 15b) zusammenwirken.

3. Vorrichtung nach Anspruch 1 oder 2,
**dadurch gekennzeichnet ,**
**dass** die Verstelleinrichtung (19) zum aufeinander folgenden Ausfahren und Einfahren mehrerer Segmente (15a, 15b) eines zumindest teilweise das Trägermodul bildenden, teleskopartig längenveränderlichen Mastes oder Turmes ausgebildet ist.

4. Vorrichtung nach einem der vorhergehenden Ansprüche,
**dadurch gekennzeichnet,**
**dass** die Haltestruktur (17) fachwerkartig ausgebildet ist.

5. Vorrichtung nach einem der vorhergehenden Ansprüche,
**dadurch gekennzeichnet ,**
**dass** die Haltestruktur (17) eine Mehrzahl von schräg nach oben aufeinander zu laufenden Beinen umfasst und insbesondere tripod-oder stativartig ausgebildet ist.

6. Vorrichtung nach Anspruch 5,
**dadurch gekennzeichnet ,**
**dass** die Beine der Haltestruktur (17) im oberen Bereich durch eine horizontal ausgerichtete Fachwerk- oder Kastenstruktur (21) miteinander verbunden sind.

7. Vorrichtung nach einem der vorhergehenden Ansprüche,
**dadurch gekennzeichnet ,**
**dass** in die Haltestruktur (17) zur Aufnahme von Horizontalkräften ausgebildete Trag- und/oder Schienenelemente (23, 25) integriert sind.

8. Vorrichtung nach einem der vorhergehenden Ansprüche,
**dadurch gekennzeichnet ,**
**dass** das Trägermodul (15a, 15b) zumindest in der Transportstellung über einen wesentlichen Teil seiner Höhe von der Haltestruktur (17) umgeben und vorzugsweise an einer Mehrzahl von in der Höhe und/oder in Umfangsrichtung verteilten Stellen durch die Haltestruktur (17) abgestützt ist.

9. Vorrichtung nach einem der vorhergehenden Ansprüche,
**dadurch gekennzeichnet ,**
**dass** sich das untere Ende des Trägermoduls (15a, 15b) zumindest in der Transportstellung im Bereich der Oberseite der Plattform (13) befindet und vorzugsweise zur Einnahme der Betriebsstellung in eine erhöhte, von der Oberseite der Plattform (13) weiter entfernt gelegene Position bewegbar ist.

10. Vorrichtung nach einem der vorhergehenden Ansprüche,
**dadurch gekennzeichnet ,**
**dass** die Einheit aus Plattform (13), Trägermodul (15a, 15b) und
Haltestruktur (17) auf ein vorbereitetes, die Gründungsposition festlegendes Fundament (27) absenkbar ist, das bevorzugt eine Mehrzahl von verankerten Gründungspfählen umfasst.

11. Vorrichtung nach einem der vorhergehenden Ansprüche,
**dadurch gekennzeichnet ,**
**dass** wenigstens ein zusätzlicher, zumindest während des Transports mit der Plattform (13) verbundener und spätestens im Anschluss an den Gründungsvorgang abnehmbarer Hilfsschwimmkörper (29) vorgesehen ist.

12. Vorrichtung nach Anspruch 11,
**dadurch gekennzeichnet ,**
**dass** die Plattform (13) und der Hilfsschwimmkörper (29) im verbundenen Zustand gemeinsam eine Schwimmplattform mit einer zumindest im Wesentlichen zusammenhängenden Oberfläche bilden.

13. Vorrichtung nach einem der vorhergehenden Ansprüche,
**dadurch gekennzeichnet ,**
**dass** das Trägermodul (15a, 15b) zwischen der Transportstellung und/oder der Betriebsstellung einerseits und wenigstens einer von der Betriebsstellung bzw. der Transportstellung abweichenden Wartungsstellung andererseits in der Höhe bzw. Länge verstellbar ist.

14. Vorrichtung nach einem der vorhergehenden Ansprüche,
**dadurch gekennzeichnet ,**
**dass** an der Haltestruktur (17) wenigstens eine Aufnahmeeinrichtung (31) für zumindest einen Bestandteil der Funktionseinheit (11) angebracht ist, der insbesondere zu Wartungs- und/oder Austauschzwecken durch eine nach unten gerichtete Verstellbewegung des Trägermoduls (15a, 15b) in die Aufnahmeeinrichtung (31) einführbar ist.

15. Vorrichtung nach Anspruch 14,
**dadurch gekennzeichnet ,**
**dass** die Aufnahmeeinrichtung (31) zur Aufnahme eines Rotorblattes (33) einer Windkraftanlage (11) und insbesondere köcherartig ausgebildet ist.

16. Verfahren zum Transport und zur Gründung von Funktionseinheiten (11), insbesondere Offshore-Windkraftanlagen, auf dem oder im Wasser, bei dem
- zumindest ein höhen- bzw. längenverstellbares Trägermodul (15a, 15b) für die Funktionseinheit (11), insbesondere ein teleskopartig längenveränderlicher Mast oder Turm, mit einer Haltestruktur (17) verbunden wird, die auf einer während des Transports als Schwimmkörper dienenden Plattform (13) verankert ist,
- die Plattform (13), das Trägermodul (15a, 15b) und die Haltestruktur (17) zusammen mit der Funktionseinheit (11) als Ganzes schwimmend zu einer jeweiligen Gründungsposition transportiert und bei Erreichen der jeweiligen Gründungsposition abgesenkt werden, und
an der Gründungsposition das von der Haltestruktur (17) abgestützte Trägermodul (15a, 15b) zusammen mit der Funktionseinheit (11) aus einer Transportstellung in eine Betriebsstellung mit gegenüber der Transportstellung erhöhtem Schwerpunkt relativ zur Plattform (13) verstellt wird.
